# EUROPÄISCHE PATENTANMELDUNG

(11) **EP 2 878 643 A1**
(43) Veröffentlichungstag der Anmeldung: **03.06.2015**
(21) Anmeldenummer: 14200131.2
(22) Anmeldetag: 22.02.2011
(51) Int. Cl.: C09J 11/06, C08K 5/07, C09D 4/00, C09J 4/00

(54) **(Meth)acrylat-Zusammensetzung mit verringerter Oberflächenklebrigkeit**

(62) Teilanmeldung aus: 11155481.2
(71) Anmelder: Sika Technology AG, 6340 Baar (CH)
(72) Erfinder: Kramer, Andreas, 8006 Zürich (CH); Haufe, Markus, 8048 Zürich (CH)
(74) Vertreter: Sika Patent Attorneys

(57) **Zusammenfassung**

Die vorliegende Erfindung betrifft eine zwei- oder mehrkomponentige Zusammensetzung, umfassend a) mindestens ein (Meth)acrylat, b) mindestens eine Verbindung der Formel (I) 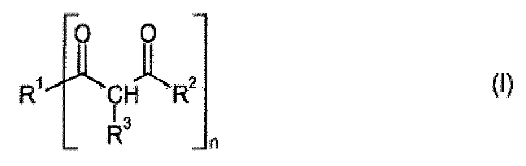 wobei n für einen Wert von 1 bis 20, insbesondere von 1, 2, 3, 4, 5 oder 6 steht, R¹ für einen n-wertigen organischen Rest steht, R² für eine, gegebenenfalls substituierte, Alkylgruppe, Cycloalkylgruppe, Arylgruppe, Aralkylgruppe steht oder zusammen mit R³ einen Ring schließt, welcher gegebenenfalls Heteroatome im oder am Ring umfasst, oder für einen Rest OR⁴ steht, wobei R⁴ für eine, gegebenenfalls substituierte, Alkylgruppe, Cycloalkylgruppe, Arylgruppe oder Aralkylgruppe steht, oder zusammen mit R³ einen Ring schließt, welcher gegebenenfalls Heteroatome im oder am Ring umfasst, und wobei R³ für eine, gegebenenfalls substituierte, Alkylgruppe, Cycloalkylgruppe, Arylgruppe, Aralkylgruppe steht oder zusammen mit R² einen Ring schließt, welcher gegebenenfalls Heteroatome im oder am Ring umfasst, c) mindestens ein Metallsalz oder eine Metallkomplexverbindung mindestens eines Metalls, ausgewählt aus der Gruppe der Übergangsmetalle, d) mindestens ein Peroxid und/oder mindestens einen Perester und/oder mindestens ein Hydroperoxid, e) mindestens eine schwache Säure mit einem pKs-Wert von 0,9 oder höher, wobei die erste Komponente K1 mindestens den Inhaltsstoff c) umfasst, die zweite Komponente K2 mindestens den Inhaltsstoff d) umfasst, und wobei die Inhaltsstoffe c) und d) nicht Teil derselben Komponente sind. Diese Zusammensetzung zeichnet sich dadurch aus, dass bei deren Aushärtung die Sauerstoffinhibierung verhindert oder stark reduziert wird und diese schnell vonstatten geht. Die Zusammensetzung eignet sich insbesondere als Klebstoff, Dichtstoff und Beschichtung.

## Beschreibung

### Technisches Gebiet

Die vorliegende Erfindung betrifft das Gebiet der radikalisch härtenden (Meth)acrylat-Zusammensetzungen.

### Stand der Technik

Radikalisch aushärtende (Meth)acrylat-Zusammensetzungen sind seit langem bekannt, und ihre Verwendung als Klebstoffe, Dichtstoffe und Beschichtungen ist vielfältig beschrieben worden. Ein wesentlicher Vorteil dieser Zusammensetzungen ist ihre schnelle Aushärtbarkeit. Viele dieser Systeme basieren auf einer Initiation der Härtung durch Kontakt mit der Luft. So beschreibt beispielsweise WO 90/02142 radikalisch härtbare Zusammensetzungen mit einem Autooxidationsaktivatorsystem, das N-Alkyl substituierte tertiäre Arylamine, eine Metallverbindungen für die Trocknungsbeschleunigung und schwach saure Verbindungen enthält, die unter Luftkontakt aushärten.

EP-A-0 611 813 beschreibt luftaktivierbare polymerisierbare Klebstoffzusammensetzungen, die ein Oniumsalz, ausgewählt aus Diazonium-, lodonium- und Sulphoniumsalzen, ein Dihydropyrridin als autooxidierbarer Verbindung und ein lösliches ionisches Salz enthalten. Schließlich beschreibt die WO 00/17241 luftaktivierbare polymerisierbare Zusammensetzungen, die aus polymerisierbaren Monomeren und einem Aktivatorsystem, umfassend ein ß-Diketon, ein lösliches ionisches Salz eines Übergangsmetalls und eine schwachen Säure, besteht. Nachteilig bei diesen vorbeschriebenen Lösungen ist jedoch, dass die Aushärtung von (Meth)acrylaten durch den in der Luft befindlichen Sauerstoff inhibiert werden kann. Dies führt dazu, dass die Polymerisation der (Meth)acrylate an der Kontaktfläche mit der Luft stark eingeschränkt wird, und sich so klebrige Oberflächen bilden. Eine derartige Klebrigkeit ist jedoch ein großer Nachteil, da einerseits dort Staub haften bleiben kann, der zu sichtbaren Verschmutzungen führt, und andererseits die nicht oder nur schwach vernetzten Monomeren eine schmierige und klebrige Oberfläche bilden, welche beim Anfassen als unangenehm empfunden wird. Weiterhin bedingt die Inhibierung eine Geruchsemission und Kontaminierung der Oberfläche mit nicht abreagierten Monomeren. Dieser Effekt ist insbesondere dort sehr nachteilig, wo Großflächen in Kontakt mit Luft stehen, z.B. bei Beschichtungen.

Es sind deshalb seit langem Anstrengungen unternommen worden, um die Sauerstoffinhibierung zu reduzieren oder gar vollständig zu unterdrücken. Als Ansatzpunkt hierfür wurde unter anderem die Verwendung von Paraffinen beschrieben, welche sich in den Monomeren lösen. Bei der Aushärtung werden die Paraffine dann mit dem entstehenden Polymer inkompatibel und sammeln sich an der Oberfläche an, wodurch das Polymer von der Luft abgeschirmt wird. Diese Lösung weist allerdings den Nachteil auf, dass die Balance zwischen Löslichkeit und Inkompatibilität sehr schwer zu steuern ist und stark vom verwendeten jeweiligen Monomer abhängt. Ein weiterer Ansatzpunkt zur Lösung der Sauerstoffproblematik ist das Überschichten der Oberfläche mit einem Inertgas oder das vollständige Arbeiten unter Inertgas. Auf einem ähnlichen Prinzip beruht die Verminderung der Sauerstoffinhibierung durch Verwendung von leicht flüchtigen Verbindungen oder Monomeren, die während der Polymerisation verdampfen und so die Luft von der Oberfläche verdrängen. Beide Ansätze sind jedoch entweder sehr aufwändig und kostenintensiv oder es ergeben sich durch die hohen Mengen an sich verflüchtigenden Verbindungen Probleme hinsichtlich des Geruchs, der Toxizität und/oder der Arbeitssicherheit.

Eine weitere Methode ist das Arbeiten bei erhöhter Temperatur oder das Tempern nach der Polymerisation bei höheren Temperaturen, was jedoch mit erhöhtem Energieaufwand verbunden und arbeitsintensiv ist. Schließlich kann die klebrige Schicht, die sich durch die Sauerstoffinhibierung bildet, auch entfernt werden. Dies kann mechanisch oder durch ein Abwischen mit einem geeigneten Lösungsmittel erfolgen, was jedoch wieder einen zusätzlichen Arbeitsschritt bedeutet und die polymerisierte Oberfläche schädigen kann.

Der Einsatz von ß-Dicarbonylverbindungen in mit Hilfe von Peroxiden trocknenden Systemen ist ebenfalls bereits im Stand der Technik beschrieben worden. Peroxide weisen gegenüber lufttrocknenden Systemen den Vorteil auf, dass diese im ungehärteten Zustand homogen in der Zusammensetzung verteilt sind und somit eine bessere Steuerung des Härtungsprozesses erlauben. In der WO 2006/133978 sind (Meth)acrylatzusammen- setzungen beschrieben, bei denen eine stark reduzierte Sauerstoffinhibierung auftritt. Dabei wird als Initiator ein Metallsalz oder eine Metallkomplexverbindung eines Übergangsmetalls neben einer ß-Dicarbonylverbindung eingesetzt. Gemäß der WO 2006/133978 haben sich von den ß-Dicarbonylverbindungen diejenigen als besonders effizient erwiesen, bei denen das zwischen den beiden Carbonylfunktionen liegende Kohlenstoffatom nur ein daran gebundenes Wasserstoffatom aufweist, während entsprechende Kohlenstoffatome mit zwei Wasserstoffen oder zwei daran gebundenen Kohlenstoffen zu deutlich verlangsamten Aushärtungszeiten führen. Daneben hat es sich gezeigt, dass das zwischen den beiden Carbonylfunktionen liegende C-Atom zweckmäßig auch in einen Ring mit einer der Carbonylfunktionen eingebunden ist, da sich bei solchen Verbindungen ebenfalls schnellere Reaktionszeiten ergeben als bei vergleichbaren Verbindungen, in denen kein Ring vorhanden ist. Die in WO 2006/133978 beschriebenen Reagenzkombinationen lassen allerdings noch Raum für Verbesserungen. Insbesondere im Bereich der Reaktionszeiten sind oft mehrere Stunden für die Aushärtung nötig.

### Darstellung der Erfindung

Aufgabe der vorliegenden Erfindung ist es daher, die Nachteile des Standes der Technik zu überwinden, und insbesondere eine Möglichkeit zu finden, um bei (Meth)acrylaten eine noch schnellere Trocknung zu erzielen. Gleichzeitig soll die durch den Sauerstoff bedingte Inhibierung verhindert oder zumindest stark reduziert werden. Diese Verbesserungen sollen auch für nicht oder nur schwach riechende (Meth)acrylate möglich sein, wobei insbesondere der Zusatz von (Meth)acrylsäuremethylester, Acrylsäure, (Meth)acrylsäure und Styrol, die eine starke Geruchsbelästigung mit sich bringen, vermieden oder eingeschränkt werden soll.

Überraschenderweise wird diese Aufgabe durch eine zwei- oder mehrkomponentige Zusammensetzung gemäß Anspruch 1 gelöst.

Die Zusammensetzung ermöglicht eine schnelle Trocknung in Gegenwart von Sauerstoff, wobei die Sauerstoffinhibierung gänzlich unterbunden oder zumindest stark reduziert wird. Dies gilt insbesondere im Vergleich zu analogen (Meth)acrylatzusammensetzungen, wie sie in der WO 2006/133978 beschrieben sind, gegenüber denen sich eine überraschend deutliche Beschleunigung der Trockenzeit erzielen lässt. Die Zusammensetzung weist außerdem exzellente mechanische Eigenschaften auf, die breit variierbar sind und mit denen sowohl dünnals auch dickschichtige Beschichtungen oder auch Dicht- und Klebstoffe realisiert werden können. Darüber hinaus lassen sich mit den in Anspruch 1 beschriebenen Zusammensetzungen Formulierungen realisieren, die ohne geruchsbelästigende Zusätze, wie (Meth)acrylsäuremethylester oder Styrol und Acryl- oder (Meth)acrylsäure, auskommen.

### Wege zur Ausführung der Erfindung

Die vorliegende Erfindung betrifft zwei- oder mehrkomponentige Zusammensetzungen, welche mindestens die folgenden Inhaltsstoffe umfassen:
a) mindestens ein (Meth)acrylat;
b) mindestens eine Verbindung der Formel (I) 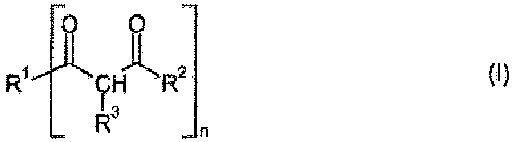
   wobei n für einen Wert von 1 bis 20, insbesondere von 1, 2, 3, 4, 5 oder 6 steht;
   R¹ für einen n-wertigen organischen Rest steht;
   R² für eine, gegebenenfalls substituierte, Alkylgruppe, Cycloalkylgruppe, Arylgruppe, Aralkylgruppe steht oder zusammen mit R³ einen Ring schließt, welcher gegebenenfalls Heteroatome im oder am Ring umfasst, oder für einen Rest OR⁴ steht,
   wobei R⁴ für eine, gegebenenfalls substituierte, Alkylgruppe, Cycloalkylgruppe, Arylgruppe oder Aralkylgruppe steht, oder zusammen mit R³ einen Ring schließt, welcher gegebenenfalls Heteroatome im oder am Ring umfasst,
   und wobei R³ für eine, gegebenenfalls substituierte, Alkylgruppe, Cycloalkylgruppe, Arylgruppe, Aralkylgruppe steht oder zusammen mit R² einen Ring schließt, welcher gegebenenfalls Heteroatome im oder am Ring umfasst;
c) mindestens ein Metallsalz oder eine Metallkomplexverbindung mindestens eines Metalls, ausgewählt aus der Gruppe der Übergangsmetalle;
d) mindestens ein Peroxid und/oder mindestens einen Perester und/oder mindestens ein Hydroperoxid;
e) mindestens eine schwache Säure mit einem pKs-Wert von 0,9 oder höher;
wobei die erste Komponente K1 mindestens den Inhaltsstoff c) umfasst, die zweite Komponente K2 mindestens den Inhaltsstoff d) umfasst, und wobei die Inhaltsstoffe c) und d) nicht Teil derselben Komponente sind.

Der Begriff *"Komponente"* oder *"komponentig"* wird nicht im Sinne von *"Inhaltsstoff"* verwendet, sondern es ist hiermit gemeint, dass eine Substanz oder eine Substanzmischung getrennt von einer anderen Substanz oder Substanzmischung gelagert wird.

Unter dem Betriff *"(Meth)acrylat"* werden im gesamten vorliegenden Dokument Ester der Acrylsäure (= Acrylat) oder der Methacrylsäure (= Methacrylat) verstanden, die somit mindestens eine CH₂=CH-CO-O- oder mindestens eine CH₂=C(CH₃)-CO-Gruppe aufweisen.

Die Vorsilbe *"Metall"* wird im gesamten vorliegenden Dokument nicht im Sinne von *"metallisch"* verstanden, sondern steht für ein Metallkation in einem Salz oder für ein in einer Komplexverbindung an Liganden gebundenes Metallkation.

Unter *"Übergangsmetalle" werden* im gesamten vorliegenden Dokument sowohl die Metalle der Ordnungszahl 21 bis 30, 39 bis 48, 57 bis 80 sowie 89 bis 109 des Periodensystems verstanden. Die Bezeichnung umfasst demnach auch die sogenannten Lanthaniden und Actiniden.

Die zwei- oder mehrkomponentige Zusammensetzung umfasst mindestens die zwei Komponenten K1 und K2.

Dabei umfasst die erste Komponente K1 mindestens den Inhaltsstoff c), d.h., die Komponente K1 kann aus mindestens einem Metallsalz oder einer Metallkomplexverbindung mindestens eines Metalls, ausgewählt aus der Gruppe der Übergangsmetalle, bestehen oder dieses umfassen. Vorzugsweise ist das Metall des mindestens einen Metallsalzes oder der Metallkomplexverbindung ein Metall, welches ausgewählt ist aus der Gruppe umfassend Cobalt, Mangan, Vanadium, Eisen, Kupfer, Chrom und Zirkonium. Besonders bevorzugt ist Cobalt, Eisen oder Mangan, insbesondere Cobalt oder Eisen, und besonders bevorzugt Eisen, da dieses gegenüber Kobalt und Mangan eine deutlich geringere Toxizität aufweist. Die Komponente K1 ist zweckmäßig vom Inhaltsstoff d) frei. Die zweite Komponente K2 umfasst hingegen mindestens den Inhaltsstoff d), ist jedoch frei vom Inhaltsstoff c). Dies bedeutet, dass die Komponente K2 entweder aus mindestens einem Peroxid, mindestens einem Perester und/oder mindestens einem Hydroperoxid besteht oder dieses umfasst.

Die zwei- oder mehrkomponentige Zusammensetzung enthält den Inhaltsstoff a) in Form mindestens eines (Meth)acrylats, wobei nicht entscheidend ist, ob das (Meth)acrylat in der Komponente K1, der Komponente K2 oder in beiden Komponenten vorhanden ist. Es eignen sich grundsätzlich alle im Kleb- und Dichtstoff- und Beschichtungsbereich eingesetzten Monomere und Oligomere. Besonders geeignet sind jedoch diejenigen Monomere und Oligomere, welche keinen oder nur einen geringen Geruch aufweisen. Aus diesem Grund ist beispielsweise die Verwendung von Methyl(meth)acrylat als Monomer nicht bevorzugt, und sollte entsprechend vermieden werden. Gleiches gilt für Acryl- und Methacrylsäure sowie Styrol.

Es hat sich gezeigt, dass insbesondere diejenigen (Meth)acrylate geeignet sind, die im Esterteil ein Heteroatom, insbesondere ein Sauerstoffatom, aufweisen, welches durch mindestens einen, aber durch weniger als fünf, insbesondere durch zwei oder drei Kohlenstoffatome, von dem in der Formel (II) mit Stern bezeichneten markierten Sauerstoffatom entfernt ist

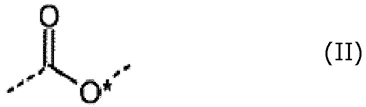

Beispiele für derartige (Meth)acrylate sind Hydroxymethyl(meth)acrylat, Hydroxyethyl(meth)acrylat (HEA, HEMA), Hydroxylpropyl(meth)acrylat (HPA, HPMA) und Hydroxybutyl(meth)acrylat (HBA, HBMA), insbesondere Hydroxyethyl(meth)acrylat (HEA, HEMA), Hydroxypropyl-(meth)acrylat (HPA, HPMA).

Weitere Beispiele für derartige (Meth)acrylate sind 2(2-Ethoxy-ethoxy)ethyl(meth)acrylat, 2-Phenoxyethyl(meth)acrylat, Caprolacton-(meth)acrylat, Methoxypolyethylenglycolmono(meth)acrylat, Poly-propylenglycolmono(meth)acrylat, Polyethylenglycolmono(meth)acrylat, Tetrahydrofurfuryl(meth)acrylat, Furfuryl(meth)acrylat, 1,3 Butylenglycol-di(meth)acrylat, 1,4 Butandioldi(meth)acrylat, Diethylenglycol-di(meth)acrylat, Dipropylenglycoldi(meth)acrylat, ethoxyliertes Bisphenol-A-di(meth)arylat, Trimethylolpropantri(meth)acrylat, Ethylenglycolmonoacetoacetatmono(meth)acrylat, Dimethylamino-(2)-ethyl(meth)acrylat.

Von diesen sind die Methacrylate gegenüber den Acrylaten bevorzugt.

Als besonders bevorzugt gelten Tetrahydrofurfuryl(meth)acrylat, Ethylenglycolmonoacetoacetatmono(meth)acrylat, Hydroxyethyl(meth)acrylat und Hydroxypropyl(meth)acrylat.

Die zwei- oder mehrkomponentige Zusammensetzung enthält den Inhaltsstoff b), nämlich mindestens eine Verbindung der Formel (I).

Verbindungen der Formel (I) sind

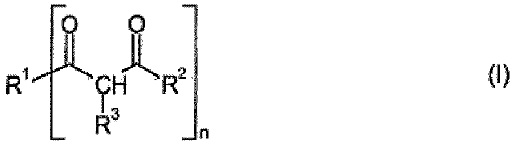

Der Index n steht hierbei für einen Wert von 1 bis 20. Bevorzugt stellt n einen Wert von 1, 2, 3, 4, 5 oder 6 dar. Bevorzugt steht n für 1. Der Substituent R¹ steht für einen n-wertigen organischen Rest.

Als "n-wertiger organischer Rest" wird hier und im Folgenden ein organischer Rest bezeichnet, zu welchem n Bindungen erfolgen. So sind beispielsweise Alkyl, Aryl, Aralkyl, Cycloalkyl, Oxyalklyl und Oxyaryl einwertige Reste, Methylen oder Phenylen zweiwertige Reste, während beispielsweise 1,2,3-Butantriyl ( H₃C-CH-CH-CH₂- ) ein dreiwertiger Rest ist.

Der Substituent R² steht für eine, gegebenenfalls substituierte, Alkylgruppe, Cycloalkylgruppe, Arylgruppe, Aralkylgruppe oder R² schließt zusammen mit R³ einen Ring, welcher gegebenenfalls Heteroatome im oder am Ring umfasst, oder R² steht für einen Rest OR⁴. Hierbei steht R⁴ für eine, gegebenenfalls substituierte, Alkylgruppe, Cycloalkylgruppe, Arylgruppe oder Aralkylgruppe, oder R⁴ schließt zusammen mit R³ einen Ring, welcher gegebenenfalls Heteroatome im oder am Ring aufweist. Der Substituent R³ steht für eine, gegebenenfalls substituierte, Alkylgruppe, Cycloalkylgruppe, Arylgruppe, Aralkylgruppe oder schließt zusammen mit R² einen Ring, welcher gegebenenfalls Heteroatome im oder am Ring umfasst.

Somit können die Substituenten R² und R³ unabhängig voneinander jeweils für eine Alkylgruppe, Cycloalkylgruppe, Arylgruppe oder Aralkylgruppe stehen, welche substituiert sein kann, oder die Substituenten R² und R³ schließen zusammen einen Ring. Dieser gebildete Ring wird typischerweise durch miteinander verbundene Kohlenstoffe gebildet. Es können aber in diesem Ring auch Heteroatome vorhanden sein, oder es können auch Heteroatome mit den Atomen, welche den Ring bilden, verbunden sein.

Es ist besonders bevorzugt, wenn die Reste R² und R³ miteinander verbunden sind und einen Ring schließen. Bevorzugt ist R³ nicht Wasserstoff.

Als n-wertiger organischer Rest für R¹ sind einerseits zweiwertige Reste wie Alkylen-, Phenylen-, Cycloalkylen-, Oxyalkylene und Poly(oxyalkylen)-Gruppen geeignet. Bevorzugt sind Ethylen, Propylen, Cyclohexylen. Anderseits sind dreiwertige bis typischerweise sechswertige Reste möglich, die sich zum Beispiel von Cylcoaliphaten oder Benzolderivaten ableiten.

Besonders bevorzugte n-wertige Reste sind Heteroatome aufweisende n-wertige organische Reste R¹.

Als n-wertige Reste R¹ eignen sich insbesondere solche welche sich von Polyolen der Formel R^{1'}(OH)ₙ ableiten. In diesen Resten ist R¹ ein Rest R^{1'}(O)ₙ, d.h. eines Alkohol R^{1'}(OH)ₙ mit n Hydroxylgruppen, nach der Entfernung aller Protonen aller Hydroxylgruppen.

Als Beispiel für 1-wertige Reste sind Alkylgruppen, wie Ethyl oder Methylgruppen, hervorzuheben.

Insbesondere können als Inhaltsstoff b) sämtliche in der WO 2006/133978 beschriebenen Verbindungen gemäß der dort genannten Formel (I) verwendet werden, die hiermit ausdrücklich in die vorliegende Anmeldung einbezogen werden.

In einer bevorzugten Ausführungsform ist die Verbindung der Formel (I) eine Verbindung der Formel (III). 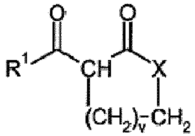 wobei v = 1, 2 oder 3 ist und X für O, S, CH₂ oder ein NR⁷ steht, wobei R⁷ für H oder eine, gegebenenfalls substituierte, Alkylgruppe, Cycloalkylgruppe, Arylgruppe oder Aralkylgruppe steht. Bevorzugt steht v für die Werte 1 oder 2. Bevorzugt bedeutet X CH₂ oder O, wobei CH₂ besonders bevorzugt ist.

In einer bevorzugten Ausführungsform ist die Verbindung der Formel (I) eine Verbindung der Formel (III) und R¹ steht für eine, gegebenenfalls substituierte, Alkoxygruppe, Cycloalkoxygruppe, Aryloxygruppe oder Aralkyloxygruppe, bevorzugt eine C₁-C₆-Alkyloxygruppe.

In einer besonders bevorzugten Ausführungsform stellt die Verbindung der Formel (I) Acetylbutyrolacton, Cyclopentanon-2-carbonsäure-ethylester oder Cyclopentanon-2-carbonsäure-methylester dar. Die Verwendung dieser Verbindungen hat sich insbesondere in Kombination mit Eisen als metallischer Komponente als besonders bevorzugt herausgestellt.

Die zwei- oder mehrkomponentige Zusammensetzung enthält den Inhaltsstoff c), also mindestens ein Metallsalz oder eine Metallkomplexverbindung wenigstens eines Metalls, ausgewählt aus der Gruppe der Übergangsmetalle, insbesondere ausgewählt aus der Gruppe, umfassend Cobalt, Mangan, Vanadium, Eisen, Kupfer, Chrom und Zirkonium.

Als besonders geeignet haben sich Metallsalze oder Metallkomplexverbindungen der Metalle Kobalt, Mangan und Eisen erwiesen, von denen wiederum Eisen als das am wenigsten giftige und günstigste Metall besonders bevorzugt ist.

Insbesondere sind Eisenkomplexe geeignet, in denen das Eisen über das Stickstoffatom mindestens eines, vorzugsweise mehrerer Pyridinringe, komplexiert ist. Diese Pyridinringe können in einem einzelnen Chelat-Liganden zusammengefasst sein oder aber unterschiedlichen Liganden angehören. Zusätzlich zu den Pyridinringen können auch weitere koordinierende Gruppen das Eisenzentrum komplexieren.

Es können Gemische von Metallsalzen oder Metallkomplexverbindungen von unterschiedlichen Metallen oder gleichen Metallen vorhanden sein. Als besonders geeignet haben sich Metallsalze oder Metallkomplexverbindungen, die insbesondere auf Carbonsäuren wie Naphthenaten, Octoaten und Ethylhexanoaten beruhen, erwiesen. Von diesen sind Octoate bevorzugt. In einer weiteren bevorzugten Ausführungsform sind Metallkomplexverbindungen, wie sie in WO 2008/003652 beschrieben sind, in der Zusammensetzung enthalten. Auch Cobalt, Vandadium, Kupfer, Chrom und Zirkonium können mit den in der WO 2008/003652 genannten Liganden kombiniert werden. Es können weitere Additive, wie Beschleuniger und Komplexierungsmittel, vorhanden sein. Besonders geeignet sind Metallsalze oder Metallkomplexverbindungen, wie sie beispielsweise von der Firma Borchers, Langenfeld-Deutschland unter den Produktreihen mit dem Handelsnamen Borchers^{®} Octa-Solingen Cobalt-12, Borchers Dry 0411 HS (ca. 7% Mn, aktiviert mit aromatischem Aminligand, oder Borchi Oxy-Coat (ca. 0.08 % Fe) vertrieben werden.

Die zwei- oder mehrkomponentige Zusammensetzung enthält den Inhaltsstoff d), nämlich mindestens ein Peroxid, mindestens einen Perester und/oder mindestens ein Hydroperoxid. Es handelt sich hierbei einerseits um Wasserstoffperoxid und andererseits um organische Peroxide, Perester oder Hydroperoxide, wie sie kommerziell erhältlich sind. Besonders bevorzugt sind Hydroperoxide, insbesondere Cumolhydroperoxid und p-Isopropylcumolhydroperoxid. Aufgrund der exzellenten Eigenschaften und wegen des geringen Geruchs ist p-Isopropylcumolhydroperoxid besonders bevorzugt. Als Peroxid ist Benzoylperoxid bevorzugt.

Als Perester hat sich insbesondere Perbenzoesäure-tert-butylester als besonders geeignet erwiesen.

Zusätzlich zu den Komponenten b), c) und d) enthält die Zusammensetzung eine schwache Säure mit einem pKs-Wert, der etwa 0,9 oder höher ist, bevorzugt nicht kleiner als 1,0. Zahlenmäßig liegt die Obergrenze bei pKs-Werten von etwa 13, bevorzugt bei etwa 11,5. Besonders geeignet sind allerdings solche Säuren, die pKs-Werte bis zu 8, vorzugsweise bis etwa 6 oder 7 aufweisen. Besonders wirkungsvolle schwache Säuren leiten sich von Säuren ab, die im hydrolysierten Zustand pKs-Werte im Zahlenbereich von etwa 1 bis 6 aufweisen.

Die erfindungsgemäß einzusetzenden schwachen Säuren sind vorzugsweise Carbonsäuren, die eine oder mehrere Carboxylgruppen aufweisen können. Die Konstitution der Säure als solche ist - den richtigen pKs-Wert vorausgesetzt - nicht so sehr der entscheidende Parameter. Es kann vorteilhaft sein, Carbonsäuren mit 1 bis 4 Carboxylgruppen und insbesondere mit 1 oder 2 Carboxylgruppen im erfindungsgemäßen System einzusetzen. Dabei sind leicht zugängliche Carbonsäuren, wie niedere aliphatische Carbonsäuren oder entsprechende aromatische mono- und polyfunktionelle Carbonsäuren, geeignete Komponenten. Geeignet sind aliphatische C₁₋₁₈-Carbonsäuren, bevorzugt C₁₋₁₀-Monocarbonsäuren. Daneben können jedoch langkettige Monocarbonsäuren, wie Neodekancarbonsäure, zielführend eingesetzt werden. Beispiele für aromatische Carbonsäuren sind die Benzoesäure oder Polycarbonsäuren, wie beispielsweise Trimellith- oder Pyromellithsäure.

Gemäß einer alternativen Ausführungsform können die freien Carbonsäuren bzw. Carboxylgruppen des Aktivatorsystems wenigstens anteilsweise COOH-Gruppen, die in ihrer Kette reaktive C=C-Bindungen aufweisen, sein. Hierbei kann den Säurekomponenten eine mehrfache Funktion zukommen, indem in der Phase der Polymerisationsauslösung den Säuregruppen die beschriebene Aktivierungsfunktion zukommt und in der hergestellten formstabilen ausgehärteten Reaktionsmasse die Eigenschaften durch die Säuremonomere modifiziert werden können indem die Säurekomponenten über die darin enthaltenen Doppelbindungen in das Polymer eingebaut werden. Zum Beispiel kann die Säure als möglicher Haftvermittler gegenüber Feststoffflächen aus beispielsweise Metall dienen oder eine erhöhte Angriffsmöglichkeit in alkalischen Medien bewirken.

Bekannt sind hier insbesondere als reaktive Mono- und/oder Dicarbonsäuren Verbindungen wie Acrylsäure, Methacrylsäure, Crotonsäure, Itaconsäure, Maleinsäure und/oder Fumarsäure, aber auch olefinisch gesättigte Verbindungen von der Art der Tetrahydrophthalsäure und verwandter Verbindungen. Bekannt ist schließlich auch, dass längerkettige, ein- oder mehrfach olefinisch ungesättigte Carbonsäuren, insbesondere ungesättigte Fettsäuren der genannten Art, mit beispielsweise 10 bis 30 C-Atomen, und insbesondere 12 bis 24 C-Atomen, über ihren Gehalt an ethylenischen Doppelbindungen in radikalisch ausgelöste Polymerisationsreaktionen einbezogen werden können.

Als schwache Säuren können auch Mesaconsäure, Citraconsäure, Sorbinsäure, Tetrahydrophthalsäure, Phthalsäure, Isophthalsäure oder Terephthalsäure eingesetzt werden.

In einer bevorzugten Ausführungsform wird auf die Verwendung von geruchsintensiven ungesättigten Carbonsäuren, wie Acrylsäure oder Methacrylsäure, verzichtet. Vorteilhaft können dagegen säurehaltige Monomere höheren Molekulargewichts, wie mono-2-(Methacryloxy)-ethylsuccinat, eingesetzt werden.

Zur Beschleunigung der Reaktion kann ein weiterer Aktivator zugesetzt werden. Geeignete Aktivatoren sind dem Fachmann ohne Weiteres geläufig. Als nicht beschränkende Beispiele seien hierbei genannt: tertiäre Amine, wie N,N-Dimethylanilin, N,N-Diethylanilin, N,N-Dimethyl-toluidin, N,N-Diethyltoluidin, N,N-bis(2-hydroxyethyl)-p-toluidin, ethoxylierte p-Toluidine, N,N-bis(2-hydroxyethyl)-p-toluidin etc. Als besonders bevorzugte Aktivatoren gelten Toluidin-Derivate, insbesondere N,N-Dialkyltoluidine. Geeignete tertiäre Amine, insbesondere p-Toluidine, können auch alkoxyliert sein.

Daneben hat sich gezeigt, dass auch tertiäre aliphatische Amine eine signifikante Reaktionsbeschleunigung bewirken können. Beispielhaft für solche tertiären Amine seien hier Triethylamin oder Diisopropylethylamin genannt.

Die zwei- oder mehrkomponentige Zusammensetzung kann weitere Bestandteile umfassen, insbesondere Füllstoffe, Thixotropiermittel, Schlagzähigkeitsmodifikationen, Katalysatoren, Aktivatoren, Chelat-liganden, Lösungsmittel, Weichmacher, Pigmente, Farbstoffe, Additive wie Haftvermittler, Verlaufsmittel, Emulgatoren, Inhibitoren sowie UV-und Wärmestabilisatoren etc.

Bevorzugt umfasst die zwei- oder mehrkomponentige Zusammensetzung neben den Inhaltsstoffen a), b), c), d) und e) zusätzlich Aktivatoren, Füllstoffe und allenfalls Weichmacher.

Die Aufteilung der Inhaltsstoffe a), b) und e) sowie der weiteren möglichen Inhaltsstoffe auf die Komponenten K1, K2 und auf allenfalls weitere Zielkomponenten kann sehr unterschiedlich erfolgen.

Es ist wichtig, dass die Inhaltsstoffe c) und d) nicht in derselben Komponente vorhanden sein dürfen. Deshalb umfasst die Komponente K1 mindestens den Inhaltsstoff c) und die Komponente K2 umfasst mindestens den Inhaltsstoff d), aber die Komponente K1 sollte frei vom Inhaltsstoff d) und die Komponente K2 frei vom Inhaltsstoff c) sein.

In einer bevorzugten Ausführungsform ist die zwei- oder mehrkomponentige Zusammensetzung eine zweikomponentige Zusammensetzung. In einer Ausführungsform ist der Inhaltsstoff a) Teil der Komponente K2. Inhaltsstoff b) ist ein Teil der Komponente K1 oder K2, bevorzugt ist er Teil der Komponente K1. Diese Ausführungsform ist insbesondere dann bevorzugt, wenn das (Meth)acrylat eine Ether-Gruppe aufweist, insbesondere bei Tetrahydrofurfuryl(meth)acrylat.

In einer anderen bevorzugten Ausführungsform einer zweikomponentigen Zusammensetzung ist der Inhaltsstoff a) Teil der Komponente K1. Der Inhaltsstoff b) ist dann Teil der Komponente K1 oder K2, bevorzugt jedoch Teil der Komponente K1.

Der Anteil der Verbindung der Formel (I) beträgt vorzugsweise 0,05 bis 20 Gew.-%, insbesondere 0,1 bis 10 Gew.-%, bevorzugt 1 bis 5 Gew.-%, bezogen auf das Gewicht der zwei- oder mehrkomponentigen Zusammensetzung. Insbesondere, wenn der Rest R¹ höhermolekular ist, typischerweise wenn der Rest R¹ ein Molekulargewicht von mehr als 100 g/Mol, insbesondere mehr als 400 g/Mol aufweist, ist es bevorzugt, dass der Anteil der Verbindung der Formel (I) 0,1 bis 20 Gew.-%, insbesondere 1 bis 20 Gew.-%, bevorzugt 3 bis 10 Gew.-%, beträgt.

Der Anteil der Verbindung des mindestens einen Metallsalzes oder der Metallkomplexverbindung, als Metall berechnet, beträgt vorzugsweise 0,001 bis 0,5 Gew.-%, insbesondere 0,01 bis 0,4 Gew.-%, bevorzugt 0,01 bis 0,2 Gew.-%, bezogen auf das Gewicht der zwei- oder mehrkomponentigen Zusammensetzung.

Der Anteil des mindestens einen Methacrylats weist von den Inhaltsstoffen a), b), c), d) und e) vorzugsweise gewichtsmäßig den größten Anteil auf. Typischerweise ist das Verhältnis a)/[a)+b)+c)+d)+e)] größer als 0,7, insbesondere 0,8 bis 0,999, bevorzugt 0,9 bis 0,99. Der Anteil an (Meth)acrylat beträgt typischerweise mehr als 20 Gew.-%, insbesondere 30 bis 99 Gew.-%, bevorzugt 40 bis 95 Gew.-%, bezogen auf das Gewicht der zwei- oder mehrkomponentigen Zusammensetzung.

Es ist bevorzugt, dass der Inhaltsstoff b) in Bezug auf Inhaltsstoff c) stöchimetrisch oder im Überschuss eingesetzt wird. Das heißt, dass das Molverhältnis [Formel (I)]/(n • [M]) ≥ 1 ist, wobei [M] für die Menge des Metalls des Metallsalzes oder der Metallkomplexverbindung in Mol und [Formel (I)] für die Menge der Verbindung der Formel (I) in Mol sowie n für den Index in der Formel (I) stehen.

Der Gehalt der schwachen Säure sollte zweckmäßig im Bereich von 0,01 bis 30 Gew.-% liegen, insbesondere im Bereich von 0,05 bis 15 Gew.-%, bevorzugt im Bereich von 0,1 bis 10 Gew.-% liegen. Wird als Säure eine einpolymerisierbare Säure gewählt, so können auch höhere Konzentrationen von mehr als 10% gewählt werden, da diese Monomere während der Polymerisation in das Polymernetzwerk integriert werden und somit nicht später von der Oberfläche abdiffundieren oder ausgewaschen werden können.

Es hat sich gezeigt, dass mit einer Mischung enthaltend den Inhaltsstoff e) zusätzlich zu den Inhaltsstoffen b) und c) die Sauerstoffinhibierung der Polymerisation von Methacrylaten noch einmal drastisch reduziert wird und gleichzeitig die Polymerisationsgeschwindigkeit deutlich erhöht werden kann. In besonders bevorzugten Fällen konnte die Sauerstoffinhibierung vollständig eliminiert werden.

Die zwei- oder mehrkomponentige Zusammensetzung kann insbesondere als Kleber oder Dichtstoff oder als Beschichtung verwendet werden.

Bei der Verwendung als Klebstoff kann das folgende Verfahren verwendet werden:
- Mischen der zwei oder mehr Komponenten der zwei- oder mehrkomponentigen Zusammensetzung
- Applizieren dieser Mischung auf eine Oberfläche eines Substrates S1
- Kontaktieren einer Oberfläche eines weiteren Substrates S2 mit der auf dem Substrat S1 applizierten Mischung, wobei die Substrate S1 und S2 aus gleichem oder unterschiedlichem Material sind
- Aushärten der gemischten Zusammensetzung

Bei der Verwendung als Dichtstoff kann das folgende Verfahren verwendet werden:
- Mischen der zwei oder mehr Komponenten der zwei- oder mehrkomponentigen Zusammensetzung
- Applizieren dieser Mischung auf eine Oberfläche eines Substrates S1
- Kontaktieren einer Oberfläche eines weiteren Substrates S2 mit der auf dem Substrat S1 applizierten Mischung, wobei die Substrate S1 und S2 aus gleichem oder unterschiedlichem Material sind
- Aushärten der gemischten Zusammensetzung

Bei der Verwendung als Beschichtungsmittel kann das folgende Verfahren verwendet werden:
- Mischen der zwei oder mehr Komponenten der zwei- oder mehrkomponentigen Zusammensetzung
- Beschichten eines Substrates S1 mit dieser Mischung
- Aushärten der gemischten Zusammensetzung an Luft

Die Substrate S1 und S2 mit denen die gemischte zwei- oder mehrkomponentige Zusammensetzung in Kontakt kommt kann vielfältiger Natur sein. Es kann sich hierbei um natürliche oder künstliche Untergründe handeln. Insbesondere handelt es sich um mineralische Untergründe wie Beton, Stein, Mauerwerk, Fels und dergleichen, oder Metalle und Metalllegierungen, wie beispielsweise Aluminium, Stahl, Messing, Kupfer oder Blech, Kunststoffe wie Polyvinylchlorid (PVC), Acrylonitril-Butadien-Styrol-Copolymere (ABS), SMC (Sheet Molding Compound), Polycarbonat (PC), Polyamid (PA), Polyester (PE), Polyoxymethylen (POM), Polyolefine, insbesondere Polyethylen (PE) oder Polypropylen (PP), bevorzugt mit Plasma, Corona oder Flammen oberflächenbehandeltes PP oder PE, oder polymere Materialien wie Lacke.

Für Applikationen auf großen Flächen und/oder in Innenräumen ist es äußerst vorteilhaft, wenn die applizierte Zusammensetzung bei und nach der Applikation möglichst geruchsfrei ist. Deshalb sind die zwei- oder mehrkomponentigen Zusammensetzungen besonders gut geeignet für das Herstellen von Fußböden oder für das Beschichten innerhalb von Gebäuden oder für Beschichtungen, Verklebungen und Abdichtungen in geschlossenen oder schlecht belüfteten Innenräumen. Insbesondere in Wohn- und Arbeitsräumen, aber auch im Fahrzeugbereich, ist die Forderung nach besonders geruchsfreien Beschichtungs-, Dicht- und Klebstoffen besonders groß.

Die zwei- oder mehrkomponentigen Zusammensetzungen zeichnen sich durch eine sehr schnelle Aushärtung aus. Dies ist insbesondere dann sehr wichtig, wenn die hergestellten Artikel schnell belastet oder weiterverarbeitet werden müssen, wie zum Beispiel ein Überschichten oder Begehen einer Beschichtung oder ein Bewegen oder Transportieren eines Kleb- oder Dichtverbundes.

Deshalb sind die Zusammensetzungen insbesondere als Montageklebstoffe geeignet. Insbesondere eignen sich derartige Montageklebstoffe für den Einsatz für Verklebungen an einer Fertigungslinie in der industriellen Fertigung von Artikeln, insbesondere von Gebrauchsgegenständen, wie beispielsweise Weißwaren, wie Waschmaschinen oder von Fahrzeugen, insbesondere von Automobilen.

### Beispiele

Die vorbeschriebene Erfindung wird im Folgenden anhand von Beispielen weiter erläutert, die jedoch den Umfang der Erfindung in keiner Weise beeinträchtigen sollen.

Von den im Weiteren beschriebenen Zusammensetzungen wurden circa 4,5 ml auf eine mit einem Rand versehene Glasplatte aufgetragen. Es wurde somit eine Beschichtung der Fläche 290 mm x 15 mm und einer Dicke von ca. 1 mm erhalten.

Es wurden die folgenden Testmethoden verwendet:

### Härtungszeit Grundschicht (t_{H/GS})

Es wurde in regelmäßigen Abständen ein Metall Spatel in die Beschichtung eingetaucht und festgestellt, ob die Glasplatte berührt werden konnte. Als Härtungszeit der Grundschicht wurde der Zeitpunkt, gemessen nach Zumischen des letzten Inhaltsstoffes, angegeben, bei dem der Metallspatel die Glasoberfläche nicht mehr berühren konnte.

### Trockenzeit (t_{T})

Zur Bestimmung der Trockenzeit wurde ein "Drying Recorder" der Firma "The Mickle Laboratory Engineering Co. Ltd.", Gomshall, Surrey (England) verwendet. Es wurde über eine Messdistanz von 29 cm gemessen, welche in 6 h durchlaufen wurde. Bei den sehr langsamen Referenzsystemen wurde die Strecke in 24 Stunden durchlaufen. Anstelle einer Nadel wurde eine aufgeschnittene Kunststoffpipette mit einem Spitzendurchmesser von ca. 1 mm verwendet, die derart platziert wurde, dass sich die Pipettenspitze ca. 1 mm oberhalb der Beschichtungsoberfläche befand. Sobald die Grundschicht des Substrates angehärtet war (manuelle Prüfung durch Berührung mit einem Spatel), wurde in die obere Öffnung der aufgeschnittenen Pipette Sand (Korngröße 0,08 - 0,2 mm) eingefüllt und mittels dem Gerät entlang der Oberfläche verschoben. Die über die Beschichtungsoberfläche geführte, sandgefüllte Pipette hinterließ so eine Sandspur auf der Oberfläche. Nach dem Entfernen der Probe aus dem Prüfgerät am Ende der Messzeit wurde der Sand mit einem Pinsel leicht abgewischt. Dabei wurde derjenige Punkt als "Trockenpunkt" bestimmt, an dem kein Sand mehr auf der Oberfläche haften blieb. Aus der vom Startpunkt bis zum "Trockenpunkt" zurückgelegten Strecke und der Härtungszeit der Grundschicht wurde die Trockenzeit berechnet.

### Beispiel 1

In einem Aluminiumkolben wurden 10 g THF-MA (Tetrahydrofurfuryl-methacrylat) vorgelegt. Dazu wurden 0,10 g Borchers Octa Solingen Kobalt-12 und eine entsprechende Menge Säure bzw. Base gegeben und die Mischung wurde kurz homogenisiert. Anschließend wurden 0,26 g Acetylbutyrolacton zugegeben und kurz homogenisiert. Zu dieser Mischung wurden drei Tropfen (ca. 0,08 g) Cumolhydroperoxid zugegeben, anschließend wurde die Trockenzeit der Grundschicht und die Härtungszeit "Tackfree" mittels eines Holzspatels bestimmt. Die Ergebnisse dieser Versuche sind in Tabelle 1 wiedergegeben.

**Tabelle 1**

| | Carbonsäure | Carbonsäure Menge [mg] | beta-Dicarbonylverbindung | beta-Dicarbonylverbindung [mg] | t_{H}/_{GS} [min] | t_{T} [min] |
|---|---|---|---|---|---|---|
| Ref1 | ohne Säure/Base | - | ohne beta-Dicarbonylverbin dung | - | 200 | 310 |
| Ref2 | ohne Säure/Base | - | 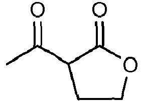 | 80 | 30 | 40 |
| 1 | 1 eq Essigsäure | 38 | 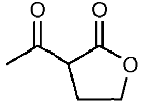 | 80 | 24 | 30 |
| 2 | 2 eq Essigsäure | 75 | 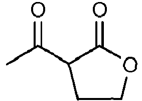 | 80 | 19 | 21 |
| 3 | 1 eq mono-(2-Methacryloyloxy)ethyl succinat | 100 | 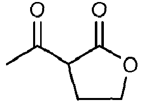 | 80 | 24 | 28 |
| 4 | 2 eq mono-(2-Methacryloyloxy)ethyl succinat | 200 | 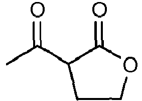 | 80 | 20 | 24 |
| 5 | 3 eq mono-(2-Methacryloyloxy)ethyl succinat | 300 | 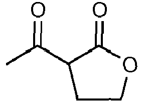 | 80 | 18 | 20 |
| 6 | 4 eq mono-(2-Methacryloyloxy)ethyl succinat | 400 | 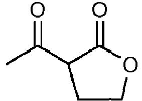 | 80 | 17 | 19 |

Wie sich aus Tabelle 1 erkennen lässt, wird sowohl die Härtungszeit als auch die Trockenzeit durch Zugabe geringer Mengen an Säure signifikant reduziert. Darüber hinaus lässt sich aus den Proben 1 und 2 mit Essigsäure und den Proben 3 bis 6 mit 2-(Methacyloyloxy)ethyl-succinat ableiten, dass im Fall der Zugabe von schwacher Säure die Reaktionsgeschwindigkeit mit zunehmender Menge an schwacher Säure weiter ansteigt.

### Beispiel 2

In einem 50 ml Speed Mixer-Becher wurden 20,0 g des Monomers bzw. der Monomermischung eingewogen und kurz homogenisiert. Anschließend wurde der Metallkatalysator (doppelte angegebene Menge) und der Ligand (doppelte angegebene Menge) zugegeben und erneut homogenisiert. Danach wurde das Peroxid (doppelte angegebene Menge) zugegeben und die Zeitmessung wurde gestartet. Nach kurzer Homogenisierung (10 Sekunden) wurde die Mischung in zwei gleiche Teile aufgeteilt, wobei die Referenz nicht weiter behandelt wurde, während zu der anderen Hälfte die angegebene Menge der Carbonsäure gegeben wurde und wieder für 10 Sekunden homogenisiert wurde. Die molare Konzentration der Carbonsäure ist in allen Beispielen identisch. Sowohl von der Referenz als auch von der Mischung gemäß der vorliegenden Erfindung wurden ca. 5,0 g auf eine Glasplatte aufgetragen. Die Ergebnisse der vorbeschriebenen Beispiele sind in Tabelle 2 wiedergegeben.

**Tabelle 2**

| Nr. | Monomer | [g] | Metall | [g] | Ligand | [g] | Peroxid | [g] | Säure | [g] | **t_{H}/_{GS} [min]** | **t_{T} [min]** |
|---|---|---|---|---|---|---|---|---|---|---|---|---|
| *0-Ref-A* | *THF-**MA*** | *10,00* | Co | *0,10* | - | *0,00* | *CHP* | *0,08* | - | *0,00* | 300 | 335 |
| ***0-Ref-B*** | ***THF-MA*** | ***10,00*** | ***Co*** | ***0,10*** | - | *0,00* | *CHP* | *0,08* | ***Neodecansäure*** | ***0,17*** | 250 | 340 |
| *1-Ref-A* | *THF-MA* | *10,00* | *Co* | *0,10* | *EAA* | *0,26* | *CHP* | *0,08* | - | *0,00* | *165* | *185* |
| ***1-Ref-B*** | ***THF-MA*** | ***10,00*** | ***Co*** | ***0,10*** | *EAA* | *0,26* | *CHP* | *0,08* | ***Neodecan-säure*** | ***0,17*** | *150* | *180* |
| 2-Ref | THF-MA | 10,00 | Co | 0,10 | ABL | 0,26 | CHP | 0,08 | - | 0,00 | 35 | 45 |
| **2-Bsp** | **THF-MA** | **10,00** | **Co** | **0,10** | **ABL** | **0,26** | **CHP** | **0,08** | ***Neodecan-saure*** | **0,17** | **25** | **30** |
| 3-Ref | THF-**MA** | 10,00 | Fe | 0,30 | CPCME | 0,28 | CHP | 0,08 | - | 0,00 | 65 | 150 |
| **3-Bsp** | **THF-MA** | **10,00** | **Fe** | **0,30** | **CPCME** | **0,28** | **CHP** | **0,08** | **Benzoe-saure** | **0,12** | **65** | **95** |
| 4-Ref | THF-**MA** (1) HEMA (1) | 10,00 | Fe | 0,30 | CPCME | 0,28 | CHP | 0,08 | - | 0,00 | 60 | > 360 |
| **4-Bsp** | THF-**MA (1) HEMA (1)** | **10,00** | Fe | **0,30** | **CPCME** | **0,28** | **CHP** | **0,08** | **Benzoesäure** | **0,12** | **60** | **120** |
| 5-Ref | THF-MA (1) HEMA (1) | 10,00 | Mn | 0,16 | ECP | 0,34 | CHP | 0,08 | - | 0,00 | > 360 | > 360 |
| **5-Bsp** | **THF-MA (1) HEMA (1)** | **10,00** | **Mn** | **0,16** | **ECP** | **0,34** | **CHP** | **0,08** | **MMOS** | **0,23** | **110** | **250** |

| | | | | | | | | | | | | |
|---|---|---|---|---|---|---|---|---|---|---|---|---|
| THF-MA = Tetrahydrofurfuryl-methacrylat HEMA = 2-Hydroxyethyl-methacrylat EAA = Ethylacetoacetat ABL = 2-Acetylbutyrolacton CPCME = 2- Cyclopentanoncarbonsäureethylester ECP = 3-Ethoxycarbonyl-2-piperidon CHP = Cumoylhydroperoxid MMOS = mono-2-(Methacyloyloxy)ethylsuccinat Co = Borchers Octa-Soligen Cobalt-12 (ca. 12% Co) Mn = Borchers Dry 0411 HS (ca. 7 % Mn, aktiviert mit aromatischem Aminligand) Fe = Borchi Oxy-Coat (ca. 0.08% Fe) | | | | | | | | | | | | |

Wie sich aus Tabelle 2 ergibt, führt der alleinige Zusatz von schwacher Säure bei Abwesenheit einer ß-Dicarbonylverbindung zu keiner signifikanten Verminderung der Härtungs- und Trockenzeit (0-Ref-A und 0-Ref-B). Demgegenüber führt der Zusatz einer schwachen Säure bei Anwesenheit einer ß-Dicarbonylverbindung zu einer starken Beschleunigung sowohl der Härtung als auch der Trocknung (1-Ref-A und 1-Ref-B).

Durch den Zusatz einer bevorzugten ß-Dicarbonylverbindung, bei der das zwischen den beiden Carbonylfunktionen liegende C-Atom ein Wasserstoffatom und eine weitere Restgruppe trägt, ergibt sich eine weitere Beschleunigung der Härtung und Trocknung bereits ohne zusätzliche schwache Säure, besonders verstärkt aber durch die erfindungsgemässe Zugabe einer solchen. Daneben zeigt Tabelle 2, dass neben Cobalt auch Metalle wie Eisen und Mangan zweckmäßig eingesetzt werden können.

## Patentansprüche

1. Zwei- oder mehrkomponentige Zusammensetzung, umfassend
a) mindestens ein (Meth)acrylat;
b) mindestens eine Verbindung der Formel (I) 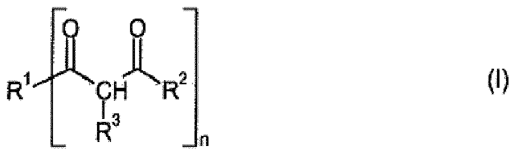
wobei n für einen Wert von 1 bis 20, insbesondere von 1, 2, 3, 4, 5 /oder 6 steht;
R¹ für einen n-wertigen organischen Rest steht;
R² für eine, gegebenenfalls substituierte, Alkylgruppe, Cycloalkylgruppe, Arylgruppe, Aralkylgruppe steht oder zusammen mit R³ einen Ring schließt, welcher gegebenenfalls Heteroatome im oder am Ring umfasst, oder für einen Rest OR⁴ steht,
wobei R⁴ für eine, gegebenenfalls substituierte, Alkylgruppe, Cycloalkylgruppe, Arylgruppe oder Aralkylgruppe steht, oder zusammen mit R³ einen Ring schließt, welcher gegebenenfalls Heteroatome im oder am Ring umfasst,
und wobei R³ für eine, gegebenenfalls substituierte, Alkylgruppe, Cycloalkylgruppe, Arylgruppe, Aralkylgruppe steht oder zusammen mit R² einen Ring schließt, welcher gegebenenfalls Heteroatome im oder am Ring umfasst;
c) mindestens ein Metallsalz oder eine Metallkomplexverbindung mindestens eines Metalls, ausgewählt aus der Gruppe der Übergangsmetalle;
d) mindestens ein Peroxid und/oder mindestens einen Perester und/oder mindestens ein Hydroperoxid;
e) mindestens eine schwache Säure mit einem pKs-Wert von 0,9 oder höher;
wobei die erste Komponente K1 mindestens den Inhaltsstoff c) umfasst, die zweite Komponente K2 mindestens den Inhaltsstoff d) umfasst, und wobei die Inhaltsstoffe c) und d) nicht Teil derselben Komponente sind.

2. Zwei- oder mehrkomponentige Zusammensetzung gemäß einem der vorhergehenden Ansprüche, **dadurch gekennzeichnet, dass** die Verbindung der Formel (I) eine Verbindung der Formel (III) ist: 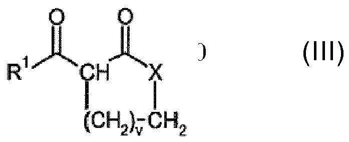 wobei v = 1, 2 oder 3, insbesondere 1 oder 2, ist und X ein O, S, CH₂ oder ein NR⁷, insbesondere CH₂, ist, wobei R⁷ für H oder für eine, gegebenenfalls substituierte, Alkylgruppe, Cycloalkylgruppe, Arylgruppe, Aralkylgruppe steht.

3. Zwei- oder mehrkomponentige Zusammensetzung gemäß einem der vorhergehenden Ansprüche, **dadurch gekennzeichnet, dass** die Verbindung der Formel (I) Acetylbutyrolacton, Cyclopentanon-2-carbonsäure-ethylester oder Cyclopentanon-2-carbonsäuremethylester ist.

4. Zwei- oder mehrkomponentige Zusammensetzung gemäß einem der vorhergehenden Ansprüche, **dadurch gekennzeichnet, dass** das Metall des mindestens einen Metallsalzes oder der Metallkomplexverbindung ein Metall ist, welches ausgewählt ist aus der Gruppe, umfassend Cobalt, Mangan, Vanadium, Eisen, Kupfer, Chrom und Zirkonium.

5. Zwei- oder mehrkomponentige Zusammensetzung gemäß einem der vorhergehenden Ansprüche, **dadurch gekennzeichnet, dass** die Metallkomplexverbindung ein Eisen-Komplex, bevorzugt ein Eisen-Komplex der mindestens einen Liganden enthält, welcher das Eisen über mindestens einen Pyridin-Rest komplexiert, ist.

6. Zwei- oder mehrkomponentige Zusammensetzung gemäß einem der vorhergehenden Ansprüche, **dadurch gekennzeichnet, dass** die schwache Säure ausgewählt ist aus gesättigten oder ungesättigten C₁₋₁₈-aliphatischen Carbonsäuren und aromatischen Carbonsäuren, die jeweils eine oder mehrere Carbonsäurefunktionalitäten tragen können, insbesondere ausgewählt ist aus Acrylsäure, Methacrylsäure, Essigsäure, mono-2-(Methyloyloxy)ethylsuccinat, Crotonsäure, Itaconsäure, Maleinsäure, Fumarsäure, Mesaconsäure, Citraconsäure, Sorbinsäure, Neodecansäure, Tetrahydrophthalsäure, Benzoesäure, Phthalsäure, Isophthalsäure, Terephthalsäure.

7. Zwei- oder mehrkomponentige Zusammensetzung, gemäß einem der vorhergehenden Ansprüche, **dadurch gekennzeichnet, dass** der Anteil der Verbindung der Formel (I) 0,05 bis 20 Gew.-%, insbesondere 0,1 bis 10 Gew.-%, bevorzugt 1 bis 5 Gew.-%, bezogen auf das Gewicht der zwei- oder mehrkomponentigen Zusammensetzung beträgt.

8. Zwei- oder mehrkomponentige Zusammensetzung, gemäß einem der vorhergehenden Ansprüche, **dadurch gekennzeichnet, dass** der Anteil der mindestens einen schwachen Säure 0,01 bis 30 Gew.-%, insbesondere 0,05 bis 15 Gew.-%, bevorzugt 0,1 bis 10 Gew.-%, bezogen auf das Gewicht der zwei- oder mehrkomponentigen Zusammensetzung beträgt.

9. Zwei- oder mehrkomponentige Zusammensetzung, gemäß einem der vorhergehenden Ansprüche, **dadurch gekennzeichnet, dass** der Anteil des mindestens einen Metallsalzes oder Metallkomplexverbindung, als Metall berechnet, 0.001 bis 0.5 Gew.-%, insbesondere 0.01 bis 0.4 Gew.-%, bevorzugt 0.01 bis 0.2 Gew-%, bezogen auf das Gewicht der zwei- oder mehrkomponentigen Zusammensetzung, beträgt.

10. Ausgehärtete Zusammensetzung, erhalten durch eine Polymerisationshärtung einer zwei- oder mehrkomponentigen Zusammensetzung gemäß einem der Ansprüche 1 bis 9 an Luft.

11. Verwendung einer Mischung, umfassend mindestens eine Verbindung der Formel (I), wie sie in einem der Ansprüche 1 bis 9 beschrieben ist, und eine schwache Säure mit einem pKs-Wert von 0,9 oder mehr, sowie mindestens ein Metallsalz oder eine Metallkomplexverbindung mindestens eines Metalls, ausgewählt aus der Gruppe der Übergangsmetalle, zur Verringerung der Sauerstoffinhibierung in der Polymerisation von (Meth)acrylaten.

12. Verwendung einer zwei- oder mehrkomponentigen Zusammensetzung gemäß einem der Ansprüche 1 bis 9 als Klebstoff, Dichtstoff, Beschichtung, insbesondere als Beschichtung.

13. Beschichteter Artikel, erhalten durch ein Verfahren, umfassend
- Mischen der zwei oder mehr Komponenten einer Zusammensetzung gemäß einem der Ansprüche 1 bis 9,
- Beschichten eines Substrates S1 mit dieser Mischung,
- Aushärten der gemischten Zusammensetzung an Luft.

14. Verklebter Artikel, erhalten durch ein Verfahren, umfassend die Schritte
- Mischen der zwei oder mehr Komponenten einer Zusammensetzung gemäß einem der Ansprüche 1 bis 9,
- Applizieren dieser Mischung auf eine Oberfläche eines Substrates S1
- Kontaktieren einer Oberfläche eines weiteren Substrates S2 mit der auf dem Substrat S1 applizierten Mischung, wobei die Substrate S1 und S2 aus gleichem oder unterschiedlichem Material sind,
- Aushärten der gemischten Zusammensetzung.

15. Abgedichteter Artikel, erhalten durch ein Verfahren, umfassend die Schritte
- Mischen der zwei oder mehr Komponenten einer Zusammensetzung gemäß einem der Ansprüche 1 bis 9,
- Applizieren dieser Mischung in einen Spalt zwischen zwei Substrate S1 und S2, wobei die Substrate S1 und S2 aus gleichem oder unterschiedlichem Material sind,
- Aushärten der gemischten Zusammensetzung.
